# EUROPÄISCHE PATENTSCHRIFT

(11) **EP 2 526 758 B1**
(45) Veröffentlichungstag und Bekanntmachung des Hinweises auf die Patenterteilung: **02.11.2016**
(21) Anmeldenummer: 12003775.9
(22) Anmeldetag: 12.05.2012
(51) Int. Cl.: A01D 34/66, A01D 67/00

(54) **Mähmaschine**
Mowing machine
Faucheuse

(30) Priorität: 27.05.2011 DE 102011103350
(43) Veröffentlichungstag der Anmeldung: 28.11.2012
(73) Patentinhaber: Maschinenfabrik Bernard Krone GmbH, 48480 Spelle (DE)
(72) Erfinder: Afting, Andreas, 48488 Emsbüren (DE); Lömker, Jens, 48496 Hopsten (DE); Landwehr, Stefan, 49740 Haselünne (DE)

(56) Entgegenhaltungen:
- EP-A1- 0 945 051
- EP-A2- 0 073 360
- EP-A2- 1 405 556
- DE-U1-202007 014 320

## Beschreibung

Die vorliegende Erfindung betrifft eine Mähmaschine zum Mähen von landwirtschaftlichem Halm- und Blattgut gemäß dem Oberbegriff des Anspruchs 1. Derartige Mähmaschinen sind aus der Praxis in zahlreichen Ausführungsformen bekannt. Dazu kann die Mäheinrichtung der Mähmaschine seitlich von dem landwirtschaftlichen Trägerfahrzeug über die Oberfläche der Feld- oder Wiesenfläche geführt werden, während für den Transport der Mähmaschine auf der Straße die Mäheinrichtung in eine Transportstellung verbracht wird, in der sich die Mäheinrichtung in im wesentlichen vertikaler Erstreckung in etwa oberhalb ihrer Trageinrichtung befindet. In der heutigen auf große Arbeitsbreiten ausgerichteten Landwirtschaft kennt man aber auch die sogenannten Triple-Kombinationen, bei denen an einem landwirtschaftlichen Trägerfahrzeug zunächst ein Frontmähwerk die Fahrspur des Trägerfahrzeuges bearbeitet und sodann zwei weitere, im Heckbereich des Trägerfahrzeuges angeordnete Mäheinheiten seitlich neben der Mähspur des Frontmähwerkes zwei weitere Mähspuren anlegen.

Eine Mähmaschine der vorstehend beschriebenen Gattung ist in der DE 20 2007 014 320 U1 bekannt geworden und umfasst eine Mäheinrichtung, die bezogen auf die Arbeitsbreite etwa in ihrem mittleren Bereich über eine Gelenkverbindung an einem Tragarm gehaltert ist und dadurch in der Arbeits- und Betriebsstellung seitlich von einem landwirtschaftlichen Trägerfahrzeug zum Mähen von landwirtschaftlichem Halm- und Blattgut über eine Feld- oder Wiesenfläche geführt werden kann. Zur Abstützung von Führungskräften, die eine Schwenkbewegung der Mäheinrichtung um die Gelenkverbindung am Tragarm erzeugen, ist eine Führungseinrichtung in der Form einer Kulissenführung vorgesehen, die an der der Fahrspur des Trägerfahrzeuges zugewandten Seite der Mäheinrichtung angebracht ist, sich zum Tragarm hin erstreckt und sich dort am Tragarm abstützt. Ein Mangel dieser Mäheinrichtung ist darin zu sehen, dass Einstellmöglichkeiten des Abstandes der Mähspur der Mäheinrichtung zur Fahrspur des Trägerfahrzeuges und damit Anpassungsmöglichkeiten der Mäheinrichtung an unterschiedliche Trägerfahrzeuge nicht gegeben sind.

Aus der EP 0 945 051 A1 ist eine Mähmaschine bekannt geworden, bei der eine, eine Anzahl von um eine etwa vertikale Achse umlaufende Mähscheiben umfassende Mäheinrichtung etwa in ihrem, in Bezug zur Breite mittigen Bereich über eine Gelenkverbindung an einem freien Ende eines Tragarmes gehaltert ist, der um eine in Fahrt-und Arbeitsrichtung gerichtete Achse schwenkbar an einer Tragvorrichtung der Mähmaschine angelenkt ist. Die Gelenkverbindung zwischen dem Tragarm und der Mäheinrichtung ist dabei als Kugelgelenk ausgebildet, so dass beim Gleiten der Mäheinrichtung über dem Feldboden auftretende und auf die Mäheinrichtung einwirkende Führungskräfte über Lenker aufgenommen werden müssen, die sich zwischen dem Tragarm und einem seitlichen, der Fahrspur des landwirtschaftlichen Trägerfahrzeuges zugewandten Abschnitt der Mäheinrichtung erstrecken. Diese Mähmaschine ist ebenso mit dem Mangel der fehlenden Einstellmöglichkeiten des Abstandes zwischen der Mähspur und der Fahrspur des landwirtschaftlichen Trägerfahrzeuges behaftet.

Die EP 1 405 556 A2 zeigt und beschreibt ein selbstfahrendes Großflächenmähwerk mit einer frontseitigen Mähwerkskombination mit wenigsten zwei Mäheinheiten, denen zwei weitere, seitlich ausladende Mäheinheiten nachgeordnet sind. Zur Anlenkung der zwei weiteren, seitlich ausladenden Mäheinheiten an das Trägerfahrzeug ist jeweils ein teleskopierbarer Ausleger vorgesehen, der am Trägerfahrzeug um eine in Fahrtrichtung zeigende Achse aus einer etwa horizontalen in eine nahezu vertikale Stellung schwenkbar angebracht ist. Am äußeren Ende dieser Ausleger sind die Mäheinheiten um eine waagerechte, fahrtrichtungsparallele Drehachse pendelbar angelenkt, so dass eine in x,y,z-Richtung wirkende Bodenanpassung der seitlich ausladenden Mäheinheiten nicht erreichbar ist.

Aufgabe der Erfindung ist es daher, eine Mähmaschine bereit zu stellen, bei der die Mängel aus dem Stand der Technik vermieden werden und damit einhergehend eine optimale Führung und Anpassung der Mäheinrichtung an unterschiedliche Bodenprofile und Oberflächen der zu bearbeitenden Feld- oder Wiesenflächen erreichbar sind.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche.

Gemäß der Erfindung wird eine Mähmaschine mit zumindest einer in einer Arbeits- und Betriebsstellung seitlich von einem landwirtschaftlichem Trägerfahrzeug geführten Mäheinrichtung vorgeschlagen, die eine Anzahl um jeweils eine etwa vertikale Achse rotierende Schneidorgane und eine Trageinrichtung umfasst, welche zumindest einen in der Arbeits- und Betriebsstellung etwa quer zur Fahrt- und Arbeitsrichtung sich erstreckenden Tragarm aufweist, an dessen freiem Ende die Mäheinrichtung über eine, eine Schwenkbewegung in x,y,z-Richtung zulassende Gelenkverbindung schwenkbar gehaltert ist und mit einer sich zwischen dem Tragarm und einem seitlichen, der Fahrspur des landwirtschaftlichen Trägerfahrzeugs zugewandten Abschnitts der Mäheinrichtung angeordneten Führungseinrichtung zur Aufnahme von Führungskräften der Mäheinrichtung, wobei die Mäheinrichtung durch eine Lageveränderung des Tragarmes aus einer etwa bodenparallelen, seitlich von dem Trägerfahrzeug geführten Arbeits- und Betriebsstellung in eine etwa vertikal ausgerichtete Transportstellung überführbar ist und der Tragarm aus einem an der Trageinrichtung der Mähmaschine angelenkten Trag- und Führungskörper und einem beweglich an dem Trag- und Führungskörper abgestützten Auslegerarm gebildet und hinsichtlich seiner Länge verstellbar ausgeführt ist und die zwischen dem Tragarm und dem seitlichen, der Fahrspur des landwirtschaftlichen Trägerfahrzeugs zugewandten Abschnitts der Mäheinrichtung angeordnete Führungseinrichtung mit dem beweglich an dem Trag- und Führungskörper abgestützten Auslegerarm verbunden ist.

Durch diese erfindungsgemäße Ausgestaltung des Tragarmes wird es dem Benutzer derartiger Mäheinrichtungen ermöglicht, unter Nutzung einer optimalen Anpassung der Mäheinrichtung an verschiedenste Bodenprofile und Einsatzverhältnisse eine Verstellung des Abstandes zwischen der Mähspur zumindest einer seitlich neben der Fahrspur eines Trägerfahrzeuges geführten Mäheinrichtung und der Fahrspur des Trägerfahrzeuges vorzunehmen. Solche Abstandsstellungen werden dann erforderlich, wenn die Mähmaschinen an die Abmessungen unterschiedlicher Trägerfahrzeuge anzupassen sind. Des Weiteren können die Abstandsveränderungen dann angewendet werden, wenn beim Betrieb von Mähkombinationen, die aus einer Frontmähmaschine und zwei Heckmähmaschinen bestehen, die Überdeckung der Mähspuren der Frontmähmaschine und der Heckmähmaschinen zueinander verändert werden soll. Erforderlich werden solche Veränderungen der Mähspuren zueinander entweder bei der genauen Abstimmung auf unterschiedliche Trägerfahrzeuge oder für Arbeitsfahrt am Hang. Eine optimale Anpassung der Mäheinrichtung an verschiedenste Bodenprofile und Einsatzverhältnisse wird in diesem Zusammenhang dadurch erreicht, dass die Mäheineinrichtung über eine Gelenkeinrichtung vom Tragarm getragen wird, während die bei der Bewegung der Mäheinrichtung über unterschiedliche Bodenprofile hinweg auftretenden Stütz- und Führungskräfte von einer Führungseinrichtung aufgenommen werden, die sich von einem der Fahrspur des Trägerfahrzeuges zugewandten Abschnitt der Mäheinrichtung zum beweglich abgestützten Auslegerarm des Tragarms, also in einem großen Wirkabstand zur Gelenkvorrichtung erstreckt. Die hier in Rede stehende Führungsvorrichtung kann dazu aus zwei etwa parallel zu einander angeordneten Lenkern bestehen, welche einerseits am beweglich abgestützten Auslegerarm und andererseits an dem der Fahrspur des Trägerfahrzeuges zugewandten Abschnitt der Mäheinrichtung angelenkt sind. Eine Veränderung der Länge des Tragarmes kann also durchführt werden, ohne dass dabei eine, die gute Bodenanpassungsfähigkeit beeinträchtigende Veränderung der Hebel- bzw. Winkelverhältnisse der als Lenker ausgeführten Führungsvorrichtung eintritt. In einer Weiterbildung der Erfindung kann die Führungsvorrichtung auch als eine Kulissenführung ausgebildet sein, bei der ein Führungsbolzen die Stütz- und Führungskräfte der Mäheinrichtung übernimmt.

In einer vorteilhaften Ausführungsform besteht der Tragarm dazu aus einem an der Trageinrichtung der Mäheinrichtung um eine in Fahrt- und Arbeitsrichtung weisende, etwa horizontale Achse schwenkbar angelenkten Trag- und Führungskörper. Beweglich abgestützt gegenüber diesem Trag- und Führungskörper ist diesem ein Auslegerarm zugeordnet, wobei diese bewegliche Abstützung dazu dient, die Länge des Tragarms insgesamt verändern zu können. In einer praktischen Ausführung weist der Trag- und Führungskörper an seinem freien Ende einen etwa vierkantförmigen Schaft auf, welcher dazu vorgesehen ist, zusammen mit dem Auslegerarm einen teleskopisch in seiner Länge veränderlichen Tragarm zu bilden. Zur Verstellung der Länge des Tragarms kann beispielsweise ein innerhalb der Kontur des Tragarmes untergebrachtes Stellglied dienen, welches als hydraulische Kolben-Zylinder-Anordnung ausgeführt sein kann.

In einer vorteilhaften Ausführungsform ist dem beweglich abgestützten Ausleger im Bereich seines freien Endes eine Schiebestütze zugeordnet. Zur Verbesserung der Stabilität des Schiebesitzes zwischen dem etwa vierkantförmigen Schaft des Trag- und Führungskörpers und dem beweglich abgestützten Ausleger ist die Schiebestütze in Stützkraft übertragender Weise mit dem vierkantförmigen Schaft verbunden.

Die Erfindung soll nun anhand eines Ausführungsbeispiels näher erläutert werden:

In der Zeichnung zeigt:
- **Fig.1:**: eine perspektivische, teilweise abgebrochen dargestellte Ansicht auf eine erfindungsgemäße Mähmaschine mit einer seitlich von der Fahrspur eines landwirtschaftlichen Trägerfahrzeuges geführten Mäheinrichtung;
- **Fig.2:**: eine Schnittdarstellung des Tragarmes nach Fig. 1;
- **Fig.3:**: eine perspektivische, teilweise ausgebrochen dargstellte Ansicht des Tragarmes nach Fig. 2;

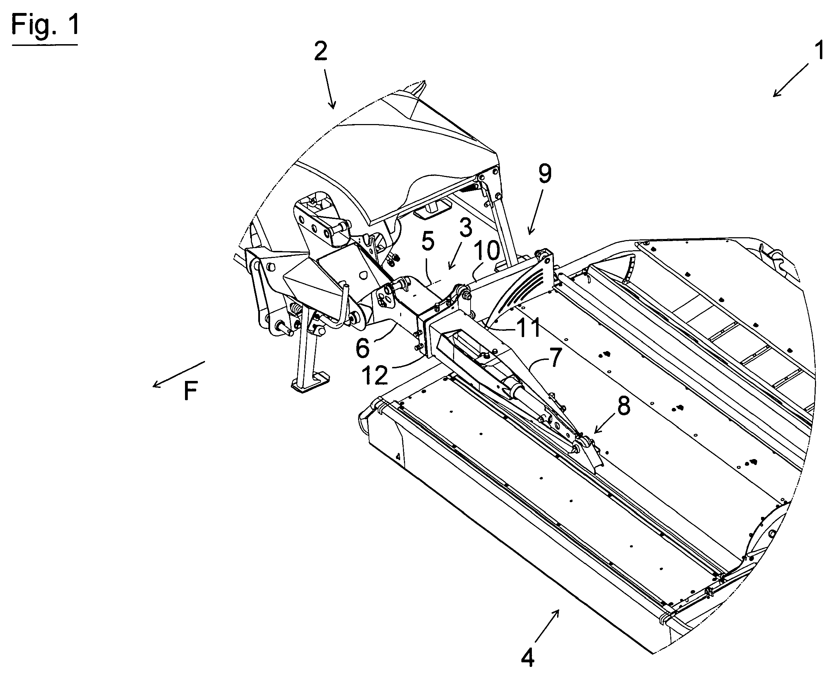

Ein Ausführungsbeispiel einer erfindungsgemäßen Mähmaschine 1 ist in den Fig. 1 näher veranschaulicht und umfasst eine Trageinrichtung 2 zur Ankoppelung der Mähmaschine 1 an ein nicht dargestelltes landwirtschaftliches Trägerfahrzeug, beispielsweise in der Art eines landwirtschaftlichen Traktors, wobei in dem in Bezug zur Fahrt- und Arbeitsrichtung F der Mähmaschine 1 linken Seite der Trageinrichtung 2 an dieser schwenkbar ein Tragarm 3 zur schwenkbaren Halterung der Mäheinrichtung 4 angelenkt ist. Die Mäheinrichtung 4 befindet sich in dieser Darstellung in einer im Wesentlichen bodenparallelen, seitlich von dem landwirtschaftlichen Trägerfahrzeug geführten Arbeits- und Betriebsstellung. In entsprechend spiegelbildlicher Position kann der Trageinrichtung eine weitere Mäheinrichtung 4 zugeordnet sein, so dass dann in Zusammenwirkung mit einer in der Front des landwirtschaftlichen Trägerfahrzeuges angehängten Mäheinrichtung eine sogenannte Triple-Kombination entstanden ist. Im Betrieb können dann zum Ernten von Gras oder dgl. Erntegüter die Mäheinrichtungen 4 der Mähmaschine 1 gleitend über die Oberfläche einer Feld- oder Wiesenfläche bewegt werden, wobei um eine etwa vertikale Achse rotierende Schneidorgane der Mäheinrichtungen 4 für das Abmähen des Erntegutes vorgesehen sind. Aus der Arbeits- und Betriebsstellung ist die Mäheinrichtung 4 durch eine Lageveränderung des schwenkbeweglichen Tragarmes 3 in eine im Wesentlichen eine etwa vertikale Erstreckung der Mäheinrichtung 4 beinhaltende Transportstellung überführbar.

Wie der Figur 1 weiterhin zu entnehmen ist, besteht der Tragarm 3 aus einem an der Trageinrichtung 2 um eine in Fahrt- und Arbeitsrichtung F weisende, etwa horizontal ausgerichtete Achse 5 schwenkbaren Trag- und Führungskörper 6. Beweglich auf diesem Trag- und Führungskörper 6 abgestützt ist nach der Erfindung ein Auslegerarm 7 zur Aufnahme der Mäheinrichtung 4 vorgesehen, wobei der beweglich abgestützte Auslegerarm 7 an seinem freien Ende eine Gelenkverbindung 8 umfasst, welche beispielsweise die Form eines bekannten Kugelgelenks aufweist. Unter einer derartigen Gelenkverbindung versteht man ein Gelenk, das eine Schwenkbewegung in x,y,z-Richtung zulässt. Damit die Mäheinrichtung 4 mit einer solchen gelenkigen Aufhängung am Auslegerarm 7 des Tragarmes 3 die notwendige optimale Anpassung an verschiedenste Bodenprofile und Einsatzverhältnisse zur Verfügung stellen kann, ist zwischen dem Auslegerarm 7 des Tragarmes 3 und dem der Fahrspur des landwirtschaftlichen Trägerfahrzeuges zugewandten Abschnitt der Mäheinrichtung 4 eine Führungseinrichtung 9 vorgesehen, die in einer vorteilhaften Ausführungsform aus zwei etwa parallel zueinander angeordneten Lenkern 10,11 gebildet ist. Die Lenker 10,11 sind dazu gelenkig an einem Halter 12 des beweglich abgestützten Auslegerarms 7 angelenkt, so dass sich bei einer Veränderung der Länge des Tragarmes 3, die durch eine Schiebebewegung des beweglich abgestützten Auslegerarms 7 gegenüber dem Trag- und Führungskörper 6 vollzogen werden kann, die aus den Lenkern 10,11 bestehende Führungsvorrichtung 9 gleichzeitig mit dem beweglich abgestützten Auslegerarm 7 nach innen oder nach außen bewegt.

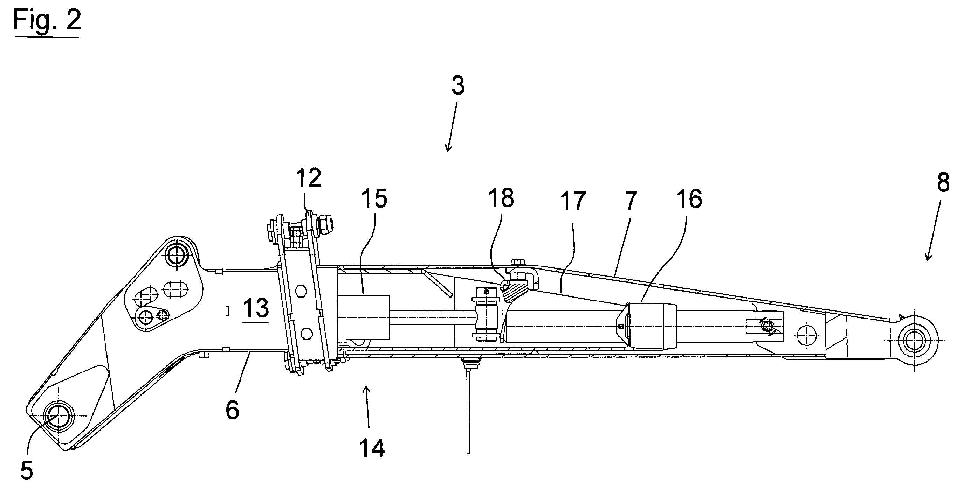

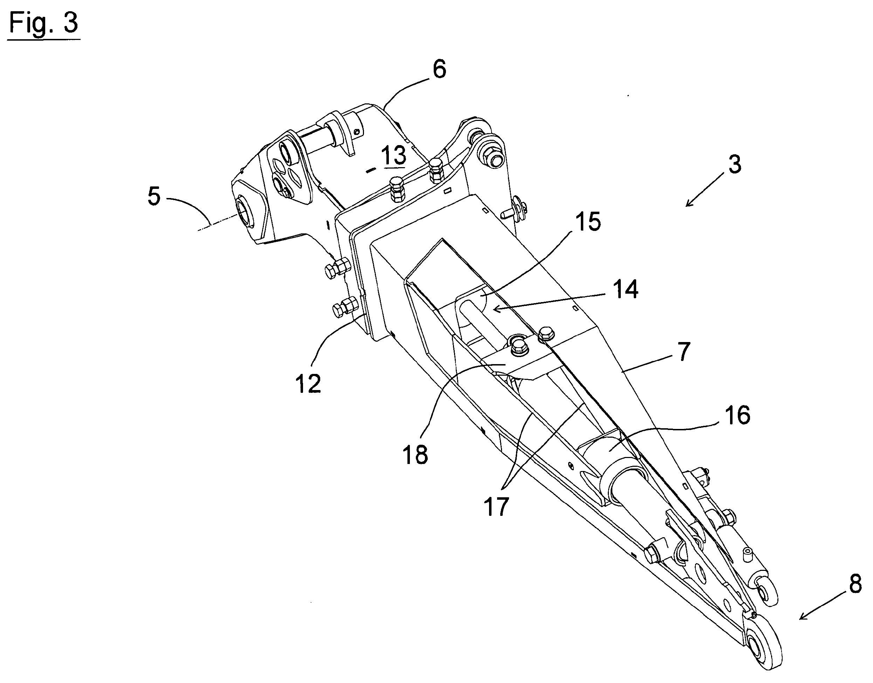

In den Figuren 2 und 3 ist eine vorteilhafte Ausführungsform eines erfindungsgemäßen Tragarmes 4 in einer vergrößerten Darstellung näher veranschaulicht. Der etwa rechteckförmige Schaft 13 des Trag- und Führungskörpers 6 ist dabei in das rohrförmig gestaltete offene Ende des beweglich abgestützten Auslegerarmes 7 eingeführt und durch ein innen liegendes Stellglied 14 bewegbar und arretierbar angebracht. In einer Ausbildung des Stellgliedes 14 als hydraulische Kolben-Zylinder-Anordnung 15 ist das kolbenbodenseitige Ende im Innern des Schafts 13 des Trag- und Führungskörpers 6 gehaltert, während das kolbenstangenseitige Ende an einer Anschlussplatte 18 des beweglich abgestützten Auslegerarms 7 angelenkt ist. Somit kann der Tragarm 3 mittels der hydraulischen Kolben-Zylinder-Anordnung 15 in seiner Länge an die jeweiligen Abmessungen unterschiedlicher landwirtschaftlicher Trägerfahrzeuge angepasst werden.

In einer vorteilhaften Weiterbildung kann dem beweglich abgestützten Ausleger 7 im Bereich seines freien Endes eine Schiebestütze 16 zugeordnet sein. Zur Verbesserung der Stabilität des Schiebesitzes zwischen dem etwa vierkantförmigen Schaft 13 des Trag- und Führungskörpers 6 und dem beweglich abgestützten Ausleger 7 ist die Schiebestütze 16 in Stützkraft übertragender Weise über Stützlaschen 17 mit dem vierkantförmigen Schaft 13 verbunden. Die Schiebestütze bildet somit eine wirkungsvolle Unterstützung zur Gewährleistung einer dauerhaft haltbaren Schiebesitzverbindung zwischen dem Trag- und Führungskörper 6 und dem beweglich abgestützten Auslegerarm 7.

## Patentansprüche

1. Mähmaschine mit zumindest einer in einer Arbeits- und Betriebsstellung seitlich von einem landwirtschaftlichem Trägerfahrzeug geführten Mäheinrichtung (4), die eine Anzahl um jeweils eine etwa vertikale Achse rotierende Schneidorgane umfasst, sowie mit einer Trageinrichtung (2), welche zumindest einen in der Arbeits- und Betriebsstellung etwa quer zur Fahrt- und Arbeitsrichtung (F) sich erstreckenden Tragarm (3) aufweist, an dessen freiem Ende die Mäheinrichtung (4) über eine, eine Schwenkbewegung in x,y,z-Richtung zulassende Gelenkverbindung (8) schwenkbar gehaltert ist und mit einer sich zwischen dem Tragarm (3) und einem seitlichen, der Fahrspur des landwirtschaftlichen Trägerfahrzeugs zugewandten Abschnitts der Mäheinrichtung (4) angeordneten Führungseinrichtung (9) zur Aufnahme von Stütz- und Führungskräften der Mäheinrichtung (4), wobei die Mäheinrichtung (4) durch eine Lageveränderung des Tragarmes (3) aus einer etwa boden parallelen, seitlich von dem Trägerfahrzeug geführten Arbeits- und Betriebsstellung in eine etwa vertikal ausgerichtete Transportstellung überführbar ist, **dadurch gekennzeichnet, dass** der Tragarm (3) aus einem an der Trageinrichtung (2) der Mähmaschine angelenkten Trag- und Führungskörper (6) und einem beweglich an dem Trag- und Führungskörper (6) abgestützten Auslegerarm (7) gebildet und hinsichtlich seiner Länge verstellbar ausgeführt ist und dass die zwischen dem Tragarm (3) und dem seitlichen, der Fahrspur des landwirtschaftlichen Trägerfahrzeugs zugewandten Abschnitt der Mäheinrichtung (4) angeordnete Führungseinrichtung (9) mit dem beweglich an dem Trag- und Führungskörper (6) abgestützten Auslegerarm (7) verbunden ist.

2. Mähmaschine nach Anspruch 1, **dadurch gekennzeichnet, dass** die Mäheinrichtung (4) durch die Längenveränderbarkeit des Tragarms (3) aus einer dicht an die Fahrspur des Trägerfahrzeuges heranreichende Arbeits- und Betriebsstellung in eine weiter entfernte Arbeits- und Betriebsstellung und zurück überführbar ist.

3. Mähmaschine nach einem der Ansprüche 1 oder 2, **dadurch gekennzeichnet, dass** der an der Trageinrichtung (2) angelenkte Trag- und Führungskörper (6) um eine in Fahrt- und Arbeitsrichtung (F) weisende, in etwa horizontal ausgerichtete Achse (5) schwenkbar ist.

4. Mähmaschine nach einem der Ansprüche 1 bis 3, **dadurch gekennzeichnet, dass** der beweglich an dem Trag- und Führungskörper (6) abgestützte Auslegerarm (7) teleskopisch auf einem Schaft (13) des Trag- und Führungskörpers (6) geführt ist.

5. Mähmaschine nach Anspruch 4, **dadurch gekennzeichnet, dass** der beweglich an dem Trag- und Führungskörper (6) abgestützte Auslegerarm (7) teleskopisch über ein innen liegendes Stellglied (14) auf einem Schaft (13) des Trag- und Führungskörpers (6) bewegbar geführt und gehaltert ist.

6. Mähmaschine nach Anspruch 5, **dadurch gekennzeichnet, dass** das innen liegende Stellglied (14) als hydraulische Kolben-Zylinder-Anordnung (15) ausgeführt ist.

7. Mähmaschine nach einem der Ansprüche 1 bis 6, **dadurch gekennzeichnet, dass** der beweglich abgestützte Auslegerarm (7) eine Schiebestütze (16) aufweist, welche mit einem in den beweglich abgestützten Auslegerarm (7) einführbaren Schaft (13) des Trag- und Führungskörpers (6) verbindbar ist.

8. Mähmaschine nach einem der Ansprüche 1 bis 7, **dadurch gekennzeichnet, dass** die zwischen dem Tragarm (3) und dem seitlichen, der Fahrspur des landwirtschaftlichen Trägerfahrzeugs zugewandten Abschnitts der Mäheinrichtung (4) angeordnete Führungseinrichtung (9) aus etwa parallel zueinander angeordneten Lenkern (10,11) gebildet ist.

9. Mähmaschine nach einem der Ansprüche 1 bis 7, **dadurch gekennzeichnet, dass** die zwischen dem Tragarm (3) und dem seitlichen, der Fahrspur des landwirtschaftlichen Trägerfahrzeugs zugewandten Abschnitts der Mäheinrichtung (4) angeordnete Führungseinrichtung (9) aus einer Kulissenführung besteht, in der ein Führungsbolzen die Abstützung der Stütz- und Führungskräfte der Mäheinrichtung (4) übernimmt.

## Claims

1. Mowing machine comprising at least one mowing device (4) which is guided in a working and operating position at the side of an agricultural carrier vehicle and comprises a number of cutting elements, each of which rotates about an approximately vertical axis, and also comprising a support device (2) which comprises at least one support arm (3) which extends approximately transversely to the travelling and working direction (F) when in the working and operating position and at the free end of which the mowing device (4) is pivotally retained by means of an articulated connection (8) which allows a pivoting movement in the x, y and z direction, and comprising a guide device (9) which is arranged between the support arm (3) and a lateral portion of the mowing device (4) facing the driving track of the agricultural carrier vehicle and is intended for absorbing supporting and guide forces of the mowing device (4), it being possible to move the mowing device (4) out of a working and operating position, in which it is almost parallel to the ground and guided at the side of the carrier vehicle and into an approximately vertically oriented transport position as a result of the support arm (3) changing position, **characterised in that** the support arm (3) is formed of a support and guide body (6) which is articulated to the support device (2) of the mowing machine and of a radial arm (7) which is movably supported on the support and guide body (6), and the length of which support arm can be adjusted, and **in that** the guide device (9), which is arranged between the support arm (3) and the lateral portion of the mowing device (4) facing the driving track of the agricultural carrier vehicle, is connected to the radial arm (7) which is movably supported on the support and guide body (6).

2. Mowing machine according to claim 1, **characterised in that** the mowing device (4) can be moved out of a working and operating position, in which it comes close to the driving track of the carrier vehicle, and into a more distant working and operating position, and back again, as a result of the length of the support arm (3) being variable.

3. Mowing machine according to either claim 1 or claim 2, **characterised in that** the support and guide body (6) articulated to the support device (2) is pivotable about an axis (5) which points in the travelling and working direction (F) and is oriented approximately horizontally.

4. Mowing machine according to any of claims 1 to 3, **characterised in that** the radial arm (7) which is movably supported on the support and guide body (6) is guided telescopically on a shaft (13) of the support and guide body (6).

5. Mowing machine according to claim 4, **characterised in that** the radial arm (7) which is movably supported on the support and guide body (6) is movably guided and retained in a telescopic manner on a shaft (13) of the support and guide body (6) by means of an inner actuator (14).

6. Mowing machine according to claim 5, **characterised in that** the inner actuator (14) is designed as a hydraulic piston-cylinder arrangement (15).

7. Mowing machine according to any of claims 1 to 6, **characterised in that** the movably supported radial arm (7) comprises a sliding bracket (16) which can be connected to a shaft (13) of the support and guide body (6) that can be inserted into the movably supported radial arm (7).

8. Mowing machine according to any of claims 1 to 7, **characterised in that** the guide device (9) which is arranged between the support arm (3) and the lateral portion of the mowing device (4) facing the driving track of the agricultural carrier vehicle is formed of connecting rods (10, 11) which are arranged approximately in parallel with one another.

9. Mowing machine according to any of claims 1 to 7, **characterised in that** that the guide device (9) which is arranged between the support arm (3) and the lateral portion of the mowing device (4) facing the driving track of the agricultural carrier vehicle consists of a slotted guide system, in which a guide pin supports the support and guide forces of the mowing device (4).

## Revendications

1. Faucheuse comprenant au moins un dispositif faucheur (4) guidé latéralement par un véhicule porteur agricole dans une position de travail et de fonctionnement et qui comporte une série d'organes de coupe mobiles en rotation autour d'un axe respectif essentiellement vertical, ainsi qu'un dispositif porteur (2) qui comporte, au moins un bras porteur (3) s'étendant essentiellement transversalement à la direction de déplacement et de travail (F) dans la position de travail et de fonctionnement et à l'extrémité libre duquel le dispositif faucheur (4) est monté pivotant par l'intermédiaire d'une articulation (8) autorisant un pivotement dans les directions x, y, z et un dispositif de guidage (9) installé entre le bras porteur (3) et un segment latéral du dispositif faucheur (4) tourné vers la voie de déplacement du véhicule porteur agricole pour recevoir les forces d'appui et de guidage du dispositif faucheur (4), le dispositif faucheur (4) pouvant être transféré par modification de la position du bras porteur (3) d'une position de travail et de fonctionnement dans laquelle il est positionné essentiellement parallèlement au sol et latéralement par rapport au véhicule porteur, dans une position de transport dans laquelle il est orienté essentiellement verticalement, **caractérisée en ce que**
le bras porteur (3) est formé d'un corps de support et de guidage (6) articulé sur le dispositif porteur (2) de la faucheuse et d'un bras de flèche (7), s'appuyant de façon mobile sur le corps de support et de guidage (6) et a une longueur réglable et, le dispositif de guidage (9) installé entre le bras porteur (3) et un segment latéral du dispositif faucheur (4) tourné vers la piste de déplacement du véhicule porteur agricole est relié au bras de flèche (7) s'appuyant de façon mobile sur le corps de support et de guidage (6).

2. Faucheuse conforme à la revendication 1,
**caractérisée en ce que**
le dispositif faucheur (4) peut être transféré, du fait de la possibilité de modifier la longueur du bras porteur (3) d'une position de travail et de fonctionnement dans laquelle il s'approche étroitement de la voie de déplacement du véhicule porteur dans une autre position de travail et de fonctionnement plus éloignée de celle-ci et inversement.

3. Faucheuse conforme à l'une des revendications 1 et 2,
**caractérisée en ce que**
le corps de support et de guidage (6) articulé sur le dispositif porteur (2) peut pivoter autour d'un axe (5) s'étendant dans la direction de déplacement et de travail (F) et orienté essentiellement horizontalement.

4. Faucheuse conforme à l'une des revendications 1 à 3,
**caractérisée en ce que**
le bras de flèche (7) s'appuyant de façon mobile sur le corps de support et de guidage (6) est guidé télescopiquement sur une tige (13) de ce corps de support et de guidage (6).

5. Faucheuse conforme à la revendication 4,
**caractérisée en ce que**
le bras de flèche (7) s'appuyant de façon mobile sur le corps de support et de guidage (6) est guidé de façon à pouvoir se déplacer télescopiquement et maintenu sur une tige (13) du corps de support et de guidage (6) par l'intermédiaire d'un organe de réglage interne (14).

6. Faucheuse conforme à la revendication 5,
**caractérisée en ce que**
l'organe de réglage interne (14) est réalisé sous la forme d'un ensemble cylindre-piston hydraulique (15).

7. Faucheuse conforme à l'une des revendications 1 à 6,
**caractérisée en ce que**
le bras de flèche (7) s'appuyant de façon mobile comporte un support coulissant (16) qui peut être relié à une tige (13) du corps de support et de guidage (6) pouvant être introduite dans ce bras de flèche (7) s'appuyant de façon mobile.

8. Faucheuse conforme à l'une des revendications 1 à 7,
**caractérisée en ce que**
le dispositif de guidage (9) installé entre le bras porteur (3) et un segment latéral du dispositif faucheur (4) tourné vers la voie de déplacement du véhicule porteur agricole est formé par des bielles (10, 11) essentiellement parallèles entre-elles.

9. Faucheuse conforme à l'une des revendications 1 à 7,
**caractérisé en ce que**
le dispositif de guidage (9) installé entre le bras porteur (3) et un segment latéral du dispositif faucheur (4) tourné vers la voie de déplacement du véhicule porteur agricole est constitué d'un guidage à coulisse dans lequel un boulon de guidage recueille les forces d'appui et de guidage du dispositif faucheur (4).
